# EUROPÄISCHE PATENTSCHRIFT

(11) **EP 1 276 705 B1**
(45) Veröffentlichungstag und Bekanntmachung des Hinweises auf die Patenterteilung: **06.10.2004**
(21) Anmeldenummer: 01925551.2
(22) Anmeldetag: 12.04.2001
(51) Int. Cl.: C04B 41/48, C09D 125/14, C09D 133/06

(54) **VERFAHREN ZUR HERSTELLUNG BESCHICHTETER MINERALISCHER FORMKÖRPER**
METHOD FOR PRODUCING COATED MINERAL SHAPED BODIES
PROCEDE DE REALISATION DE CORPS MINERAUX MOULES DOTES D'UN REVETEMENT

(30) Priorität: 14.04.2000 DE 10018469
(43) Veröffentlichungstag der Anmeldung: 22.01.2003
(73) Patentinhaber: Celanese Emulsions GmbH, 61476 Kronberg/Ts. (DE)
(72) Erfinder: KRIEGER, Stephan, 65719 Hofheim (DE); GRAU, Angelika, 65931 Frankfurt am Main (DE)
(74) Vertreter: Ackermann, Joachim, Dr., Patentanwalt Dr. Ackermann
(86) Internationale Anmeldenummer: PCT/EP2001/004261
(87) Internationale Veröffentlichungsnummer: WO 2001/079140

(56) Entgegenhaltungen:
- EP-A- 0 675 177
- WO-A-97/15604
- US-A- 3 705 124
- US-A- 4 661 170

## Beschreibung

Die Erfindung betrifft ein Verfahren zur Herstellung beschichteter mineralischer Formkörper, das dadurch gekennzeichnet ist, dass die zur Beschichtung verwendeten wässrigen Beschichtungsmittel mindestens eine Styrol-Maleinsäureanhydrid-Copolymer Lösung enthalten. Die so beschichteten Formkörper zeigen ein verbessertes Ausblühverhalten. Das Verfahren eignet sich insbesondere zur Beschichtung von Dachsteinen und Faserzementplatten.

Bei der Herstellung von Betondachsteinen wird in der Regel eine entsprechend geformte Mörtelmasse vor der Härtung zur Farbgebung mit einer Dispersionsfarbe beschichtet. Die anschließende Härtung erfolgt dann zusammen mit der Trocknung der Farbe bei Temperaturen von 40 bis 100°C. Nach der Härtung kann noch eine zweite Beschichtung mit einer Dispersionsfarbe oder einem Klarlack erfolgen. Neben der Farbgebung hat die Dispersionsfarbe die Aufgabe, während der Härtung der Betondachsteine Kalkausblühungen zu verhindern.

Damit die Farbe auf dem nicht gehärteten Beton, der als grüner Beton bezeichnet wird, nicht koaguliert, wird von dem in der Farbe enthaltenen Bindemittel eine gewisse Zementverträglichkeit und Salzstabilität gefordert. Dies wird in der Regel durch Verwendung von ionischen und/oder nichtionische Emulgatoren, sowie durch den Einsatz funktioneller Monomerer, wie z.B. Methacrylsäure, Acrylsäure, Maleinsäure, Acrylamid, Methacrylamid, Ethensulfonat, Sulfoxyalkylmethacrylat oder Acrylamidoalkylsulfonsäuren, erreicht.

Eine weitere Aufgabe der Dispersionsfarbe liegt darin, die Anschmutzung und insbesondere den Algenbewuchs auf den fertigen Dachsteinen zu verhindern bzw. zu reduzieren.

In der EP-A-0 894 780 werden strahlenhärtbare Beschichtungen für mineralische Formkörper mit verbessertem Ausblühschutz beschrieben, deren Herstellung jedoch mit einem erhöhten technischen Aufwand und erhöhten Kosten verbunden ist.

Die EP-A-0 754 663 beschreibt die Beschichtung zementartiger Substrate, wobei das Ausblühverhalten dadurch verbessert wird, dass die Beschichtungen mit Hilfe von aliphatischen (C₁₂-C₂₄)-Carbonsäuren als Schaummittel auf die Substrate geschäumt werden.

Die EP-A-0 469 295 beschreibt Beschichtungen, deren Ausblühverhalten durch die Verwendung von Emulgatoren auf Basis von sulfonierten Diarylethern verbessert wird.

In der WO 99/48841 wird beschrieben, dass durch die Verwendung von Carboxymethylcellulose als Schutzkolloid Dispersionen mit gutem Ausblühschutz und hinreichender Stabilität hergestellt werden können.

In der WO 97/15604 werden Styrol-Acrylsäureester Latices beschrieben, die durch Emulsionspolymerisation von Styrol und Acrylsäureestern in Gegenwart eines Styrol-Maleinsäureanhydrid Copolymeren hergestellt werden, und die zur Herstellung lösungsmittelfreier Farben geeignet sind.

Überraschend wurde nun gefunden, dass beim Beschichten von mineralischen Formkörpern mit einem wässrigen Beschichtungsmittel, enthaltend eine Polymerdispersion als Bindemittel, das Ausblühverhalten der beschichteten Formkörper verbessert wird, wenn die Polymerdispersion mindestens eine Styrol-Maleinsäureanhydrid-Copolymer Lösung enthält, die der Polymerdispersion nach Abschluß der Polymerisation zugesetzt wird.

Gegenstand der vorliegenden Anmeldung ist somit ein Verfahren zur Herstellung eines zumindest teilweise beschichteten mineralischen Formkörpers durch Auftragen eines wässrigen Beschichtungsmittels, enthaltend eine Polymerdispersion als Bindemittel und mindestens eine wässrige Styrol-Maleinsäureanhydrid-Copolymer Lösung, auf zumindest einen Teil der Oberfläche des Formkörpers und anschließende Härtung des Formkörpers und Trocknung des Beschichtungsmittels, das dadurch gekennzeichnet ist, dass die mindestens eine wässrige Styrol-Maleinsäureanhydrid-Copolymer Lösung der Polymerdispersion nach Abschluß der Polymerisation zugesetzt wird.

Unter Formkörpern werden hierbei z.B. Steine, Ziegel, Betonsteine, Dachsteine, Platten, Röhren und Skulpturen verstanden.

Das Auftragen des Beschichtungsmittels kann mittels allen dem Fachmann geläufigen Techniken erfolgen.

Die Härtung des Formkörpers und Trocknung des Beschichtungsmittels erfolgt bevorzugt bei Temperaturen von 40 bis 100°C.

Die Polymerdispersionen enthalten, bezogen auf den Feststoffanteil, bevorzugt 0,5 bis 5 Gew.-%, besonders bevorzugt 1 bis 3 Gew.-%, an Styrol-Maleinsäureanhydrid Copolymeren.

Die Styrol-Maleinsäureanhydrid-Copolymer Lösungen werden dabei bevorzugt so hergestellt, dass man die Styrol-Maleinsäureanhydrid Copolymere in Wasser einrührt und unter Zusatz einer Lauge, wie z.B. Ammoniak, Monoethanolamin, Natriumhydroxid und/oder Kaliumhydroxid, bei Temperaturen von 20 bis 100°C in Lösung bringt. Die fertigen Lösungen haben bevorzugt einen pH-Wert > 8.

Als Styrol-Maleinsäureanhydrid-Copolymer Lösungen eignen sind auch kommerziell erhältliche Lösungen, wie z.B. SMA 1000 HNa®, SMA 2000 HNa®, SMA 3000 HNa® und SMA 4000 HNa® (Elf Atochem).

Bevorzugt basieren die Polymerdispersionen auf Polymeren, die
a) 85 bis 100 Gew.-%, besonders bevorzugt 85 bis 99,8 Gew.-%, Ester der Acrylsäure mit C₁-C₁₂ Alkanolen, wie z.B. Ethylacrylat, Butylacrylat, n-Octylacrylat und 2-Ethylhexylacrylat, Ester der Methacrylsäure mit C₁-C₁₂ Alkanolen, wie z.B. Methylmethacrylat, Butylmethacrylat, Cyclohexylmethacrylat und Isobornyl-methacrylat und/oder vinylaromatische Monomere, wie z.B. Styrol und Vinyltoluol,
b) 0 bis 5 Gew.-%, besonders bevorzugt 0,2 bis 5 Gew. %, stabilisierende Monomere und
c) 0 bis 10 Gew.-% sonstige Monomere enthalten.

Dabei werden bevorzugt solche Kombinationen von weichmachenden Monomeren, wie z.B. Butylacrylat und 2-Ethylhexylacrylat, und hartmachenden Monomeren, wie z.B. Methylmethacrylat und Styrol, verwendet, dass die Glastemperatur der Polymere bevorzugt im Bereich von -10 bis 60°C, besonders bevorzugt im Bereich von -5 bis 45°C und insbesondere im Bereich von 0 bis 30°C liegt.

Als Monomere a) bevorzugt sind Ester der Acrylsäure mit C₁-C₁₂ Alkanolen und/oder Styrol.

Als stabilisierende Monomere b) bevorzugt sind Carbonsäuren, wie z.B. Acrylsäure, Methacrylsäure und Itaconsäure, Carbonsäureamide, wie z.B. Acrylamid, Methacrylamid, Phosphate, wie z.B. (Meth)acryloyloxyalkylphosphate, Phosphonate, Sulfate, Sulfonate, wie z.B. Natriumethensulfonat, Sulfoalkyl(meth)acrylate, z.B. das Kaliumsalz von Sulfopropylmethacrylat (SPM®, Firma Raschig) und/oder Sulfoalkyl(meth)acrylamide, wie z.B. das Natriumsalz der Acrylamido-2-methyl-propansulfonsäure (AMPS®, Firma Lubrizol).

Als Monomere c) bevorzugt sind ketogruppenhaltige Monomere, wie z.B. acetoacetoxygruppenhaltigen Monomere, copolymerisierbare Derivate des Diacetons, wie z.B. Diacetonacrylamid und Diacetonmethacrylamid, copolymerisierbare Silane, wie z.B. Alkoxyvinylsilane und (Meth)acryloyloxyalkylsilane, copolymerisierbare Ethylenharnstoffderivate, wie z.B.

N-((Meth)acryloxyethyl)-N,N'-ethylenharnstoff und N-(Acrylamidoethyl)-N,N'ethylenharnstoff, hydroxygruppenfunktionelle Monomere, wie z.B. Hydroxyalkyl(meth)acrylate, und/oder epoxyfunktionelle Monomere, wie z.B. Glycidylmethacrylat.

Besonders bevorzugt als Monomere c) sind die acetoacetoxygruppenhaltigen Monomere Acetoacetoxyethylmethacrylat, Acetoacetoxybutylmethacrylat, Acrylamidomethylacetylaceton, Acetessigsäurevinylester, Diacetonacrylamid und Diacetonmethacrylamid.

Zur Verbesserung des Anschmutzverhaltens enthalten Polymerdispersionen, die als sonstige Monomere c) ketogruppenhaltige Monomere enthalten, vorteilhafterweise zusätzlich noch polyfunktionelle Carbonsäurehydrazide, die mindestens zwei Hydrazidgruppen besitzen. Vorzugsweise wird ein äquimolares Verhältnis von Hydrazidgruppen zu Ketogruppen verwendet. Als polyfunktionelle Carbonsäure-hydrazide besonders geeignet sind Adipinsäuredihydrazid, Oxalsäuredihydrazid, Isophthalsäuredihydrazid und/oder Polyacrylsäurepolyhydrazid.

Als Polymerdispersionen eignen sind auch handelsübliche Reinacrylat- und Styrol-Acrylat Dispersionen, wie z.B. Mowilith® DM 611, Mowilith® DM 777, Mowilith® LDM 7412 und Mowilith® 771 (Clariant GmbH).

Die Herstellung der Polymerdispersionen kann nach den gängigen Verfahren der Emulsionspolymerisation durchgeführt werden, wobei die Monomeren in der wässrigen Phase in Gegenwart von Emulgatoren, Initiatoren und Schutzkolloiden emulgiert werden und zweckmäßigerweise bei Temperaturen von 60 bis 95°C polymerisiert werden.

Die Emulsionspolymerisation kann nach den gängigen, dem Fachmann bekannten Verfahren, wie z.B. Batch-, Monomerendosier- oder Emulsions-Zulaufverfahren, durchgeführt werden. Vorzugsweise wird nach dem Emulsions-Zulaufverfahren gearbeitet, bei dem eine kleine Menge der Monomeren vorpolymerisiert wird und anschließend die verbleibende Menge an Monomeren in Form einer wässrigen Emulsion zudosiert wird. Gegebenenfalls können auch mehrere verschiedene Monomerenemulsionen nacheinander zudosiert werden.

Die Dispersionen enthalten, bezogen auf den Gehalt an Polymerisat, bevorzugt bis zu 3 Gew.-%, besonders bevorzugt bis zu 2 Gew.-%, an ionischen Emulgatoren und bevorzugt bis zu 6 Gew.-%, besonders bevorzugt bis zu 4 %, an nichtionischen Emulgatoren.

Als nichtionische Emulgatoren eignen sich z.B. Alkylpolyglykolether, wie z.B. Ethoxylierungsprodukte von Lauryl-, Oleyl- oder Stearylalkohol oder Gemischen derselben, wie z.B. Kokosfettalkohol; Alkylphenolpolyglykolether, wie z.B. Ethoxylierungsprodukte von Octyl- oder Nonylphenol, Diisopropylphenol, Triisopropylphenol und Di- oder Tri-tert.-butylphenol; und/oder Ethoxylierungsprodukte von Polypropylenoxid .

Als ionogene Emulgatoren eignen sich bevorzugt anionische Emulgatoren, wie z.B. die Alkali- oder Ammoniumsalze von Alkyl-, Aryl- oder Alkylarylsulfonaten, - sulfaten, -phosphaten, -phosphonaten oder Verbindungen mit anderen anionischen Endgruppen, wobei sich auch Oligo- oder Polyethylenoxid-Einheiten zwischen dem Kohlenwasserstoffrest und der anionischen Gruppe befinden können. Typische Beispiele sind Natriumlaurylsulfat, Natriumundecylglykolethersulfat, Natriumlauryldiglykolsulfat, Natriumtetradecyltriglykolsulfat, Natriumoctyl-phenolglykolethersulfat, Natriumdodecylbenzolsulfonat, Natriumlauryldiglykolsulfat, Ammonium-tri-tert.butylphenolpenta- und octaglykolsulfat.

Zum Starten und Weiterführen der Polymerisation können öl- oder wasserlösliche Radikalbildner oder Redoxsysteme verwendet werden. Geeignet sind z.B. Wasserstoffperoxid, Kalium-, Natrium- oder Ammoniumperoxodisulfat, Dibenzoylperoxid, Laurylperoxid, Tri-tert.-butylperoxid, Bisazodiisobutyronitril, allein oder zusammen mit reduzierenden Komponenten, wie z.B. Natriumbisulfit, Rongalit, Glukose, Ascorbinsäure und anderen reduzierenden Verbindungen. Bevorzugt werden Peroxodisulfate verwendet.

Des weiteren können bei der Polymerisation Regler, wie z.B. Mercaptane, insbesondere N-Dodecylmercaptan, Thiophenol und 2-Methyl-5-tert.-butylthiophenol, in Mengen von bis 1 Gew.-%, bevorzugt bis 0,5 Gew.-%, eingesetzt werden. Zweckmäßigerweise sollte die Verwendung von Reglern jedoch vermieden werden.

Wird nach dem Verfahren der Mehrstufenemulsionspolymerisation gearbeitet, so werden die hartmachenden und die weichmachenden Monomere und das Verhältnis der Phasen vorteilhafterweise so miteinander kombiniert, dass die Dispersion eine Mindestfilmbildetemperatur im Bereich von 0 bis 50°C besitzt und die entsprechenden Dispersionsfilme bei einer Filmdicke von 100 µm eine Reißdehnung von >150 % besitzen.

Die Dispersionen werden bevorzugt auf einen pH-Wert von 6,5 bis 10, besonders bevorzugt 7,0 bis 9,0, eingestellt. Als Basen eignen sich hierzu z.B. wässrige Ammoniak-, Alkali- und Erdalkalihydroxidlösungen. Die Verwendung von Puffern, wie z.B. Natriumhydrogenphosphat, Natriumacetat und Natriumhydrogencarbonat, die gegebenenfalls schon während der Emulsionspolymerisation eingesetzt werden, ist ebenfalls möglich.

Die Beschichtungsmittel enthalten gegebenenfalls noch Filmbildehilfsmittel, wie z.B. Testbenzin, Texanol®, Butylglykol, Butyldiglykol, Butyldipropylenglykol und Butyltripropylenglykol, Weichmacher, wie z.B. Dimethylphthalat, Dibutylphthalat, Adipinsäurediisobutylester, Dispergiermittel, wie z.B. Polyacrylsäuren und entsprechende Copolymere, z.B. Lopon® 890, Dispex® G40, Verdicker, wie z.B. solche auf Basis von Polyacrylaten und Polyurethanen, z.B. Borchigel® L75 und Tafigel® PUR 60, Emulgatoren, Stabilisatoren, Schutzkolloide, Konservierungsmittel, Entschäumer, wie z.B. Mineralöl- und Silikonentschäumer, Netzmittel, wie z.B. Aminomethylpropanol, Füllstoffe, wie z.B. Calcit, Kreide, Quarzmehl und Schwerspat, Pigmente, wie z.B. Eisenoxid-Rot, Schwarzpigmente und organische Pigmente und/oder weitere Additive, wie sie zur Formulierung von Beschichtungsmitteln üblich sind.

Die gewünschte Viskosität der Beschichtungsmittel kann durch den Zusatz von Wasser und/oder die Verwendung von Verdickern eingestellt werden.

In einer Ausführungsform wird das Verfahren so geführt, dass man anschließend an die Härtung des Formkörpers und Trocknung des Beschichtungsmittels eine weitere Schicht desselben Beschichtungsmittels oder eines anderen Beschichtungsmittels auf den Formkörper aufträgt und anschließend das Beschichtungsmittel trocknet und gegebenenfalls anschließend das Verfahren einmal oder mehrmals wiederholt.

Das erfindungsgemäße Verfahren eignet sich besonders zur Beschichtung von Dachsteinen und Faserzementplatten.

Bevorzugt handelt es sich bei den Beschichtungsmitteln um Dachsteinfarben.

Gegenstand der Erfindung sind auch Formkörper, die gemäß dem oben beschriebenen Verfahren hergestellt werden.

Die folgenden Beispiele dienen der Erläuterung der Erfindung, ohne sie jedoch einzuschränken.
- Beispiele 1 bis 8:: Herstellung von Polymerdispersionen, enthaltend Styrol-Maleinsäureanhydrid-Copolymer Lösungen

### Beispiel 1:

In 1000 g der Styrol-Acrylat Dispersion Mowilith® DM 611 (Clariant GmbH, Feststoff-gehalt ca. 50 %) werden 20 g einer 25 %igen Styrol-Maleinsäureanhydrid-Copolymer Lösung SMA 3000 HNa® (Elf Atochem) eingerührt.

### Beispiel 2:

In 1000 g der Acrylatdispersion Mowilith® DM 777 (Clariant GmbH, Feststoffgehalt 46 %) werden 20 g der 25 %igen Styrol-Maleinsäureanhydrid-Copolymer Lösung SMA 3000 HNa® (Elf Atochem) eingerührt.

### Beispiel 3:

In 1000 g der Acrylatdispersion Mowilith® LDM 7412 (Clariant GmbH, Feststoffgehalt von ca. 46 %) werden 20 g der 25 %igen Styrol-Maleinsäureanhydrid-Copolymer Lösung SMA 3000 HNa® (Elf Atochem) eingerührt.

### Beispiel 4:

In 1000 g der Acrylatdispersion Mowilith® LDM 771 (Clariant GmbH, Feststoffgehalt 50 %) werden 20 g der 25 %igen Styrol-Maleinsäureanhydrid-Copolymer Lösung SMA 3000 HNa® (Elf Atochem) eingerührt.

### Beispiel 5:

Es wird eine Dispersion wie folgt hergestellt:

Eine Monomeremulsion bestehend aus:

| | |
|---|---|
| 965,6 Gew.-Teilen | Wasser |
| 185,7 Gew.-Teilen | einer 28 %igen Lösung eines C₁₂-C₁₄-Alkylpolyglykolethersulfats mit ca. 3 Ethylenoxideinheiten |
| 26,0 Gew.-Teilen | Methacrylsäure |
| 15,6 Gew.-Teilen | Acrylsäure |
| 3,0 Gew.-Teilen | Ammoniumperoxodisulfat |

wird mittels eines Schnellrührers in eine Mischung bestehend aus:

| | |
|---|---|
| 2808 Gew.-Teilen | Methylmethacrylat |
| 2392 Gew.-Teilen | Butylacrylat |

eingerührt und so lange gerührt, bis eine stabile Emulsion entsteht. In einem geeigneten Reaktionsgefäß werden dann 2470 Gew.-Teile Wasser, 9,3 Gew.-Teile einer 28 %igen Lösung eines C₁₂-C₁₄-Alkylpolyglykolethersulfats mit ca. 3 Ethylenoxideinheiten und 312 Gew.-Teile der Monomeremulsion auf 80°C erhitzt und mit einer Lösung von 2,6 Gew.-Teilen Ammoniumperoxodisulfat in
69,4 Gew.-Teilen Wasser versetzt. Anschließend wird innerhalb von 3,5 Stunden die restliche Monomeremulsion zudosiert. Es wird noch 60 Minuten weiter geheizt und dann abgekühlt. Der pH-Wert der Dispersion wird mit einer 12,5 %igen Ammoniaklösung auf pH = 9,0 eingestellt. Der Feststoffgehalt der Dispersion beträgt ca. 52,7 % und die Mindestfilmbildetemperatur MFT beträgt ca. 14°C.

### Beispiel 6:

In 1000 g der Dispersion aus Beispiel 5 werden 20 g einer 25 %igen Styrol-Maleinsäureanhydrid-Copolymer Lösung SMA 3000 HNa®(Elf Atochem) eingerührt.

### Beispiel 7

Es wird eine Dispersion wie folgt hergestellt:

Eine Monomeremulsion bestehend aus:

| | |
|---|---|
| 589,3 Gew.-Teilen | Wasser |
| 53,6 Gew.-Teilen | einer 28 %igen Lösung eines C₁₂-C₁₄-Alkylpolyglykolethersulfats mit ca. 3 Ethylenoxideinheiten |
| 45,0 Gew.-Teilen | AMPS® 2403 Lösung (Lubrizol) |
| 3,0 Gew.-Teilen | Natriumhydrogencarbonat |
| 4,5 Gew.-Teilen | Natriumperoxodisulfat |

wird mittels eines Schnellrührers in eine Mischung bestehend aus:

| | |
|---|---|
| 810 Gew.-Teilen | Methylmethacrylat |
| 690 Gew.-Teilen | Butylacrylat |

eingerührt und so lange gerührt, bis eine stabile Emulsion entsteht. In einem geeigneten Reaktionsgefäß werden dann 712,5 Gewichtsteile Wasser, 2,7 Gewichtsteile einer 28 %igen Lösung eines C₁₂-C₁₄-Alkylpolyglykolethersulfats mit ca. 3 Ethylenoxideinheiten und 90 Gew.-Teile der Monomeremulsion auf 80°C erhitzt und mit einer Lösung von 0,75 Gew.-Teilen Natriumperoxodisulfat in 7,5 Gew.-Teilen Wasser versetzt. Anschließend wird innerhalb von 3,5 Stunden die verbleibende Monomeremulsion zudosiert. Es wird noch 60 Minuten weiter geheizt und dann abgekühlt. Der Feststoffgehalt der Dispersion beträgt ca. 52 % und die Mindestfilmbildetemperatur MFT beträgt 16°C.

### Beispiel 8:

In 1000 g der Dispersion aus Beispiel 7 werden 20 g einer 25 %igen Styrol-Maleinsäureanhydrid-Copolymer Lösung SMA 3000 HNa® (Elf Atochem) eingerührt.

### Beispiele 9 und 10: Herstellung von Farbpasten

### Beispiel 9:

Es wird eine Farbpaste für Dachsteinfarben hergestellt, indem in 328 g Wasser

| | |
|---|---|
| 18,0 g | Dispergiermittel Lopon® 890 (BK Giulini) |
| 6,0 g | Netzmittel AMP 90® (Angus Chemie GmbH) |
| 3,0 g | Konservierungsmittel Mergal® K 14 (Troy) |

vorgelegt werden und mittels eines Dissolvers nacheinander

| | |
|---|---|
| 75,0 g | China Clay B®(ECC International) |
| 630,0 g | Omyacarb® 5 GU (Omya) |
| 180,0 g | Eisenoxid schwarz |
| 4,5 g | Tylose® H 300 (Clariant GmbH) |

eindispergiert werden.

### Beispiel 10:

Es wird eine Farbpaste hergestellt, indem mittels eines Dissolver in 100 g Wasser nacheinander 200 g Calcitfüllstoff und 50 g Eisenoxid-Rot Pigment eingerührt werden.

### Beispiele 11 bis 16:

Herstellung von Farben und Beschichtung von Eterplanplatten, sowie Beurteilung des Ausblühverhaltens (Vergleichsbeispiele 12, 14 und 16)

Es werden Farben hergestellt, indem die in Tabelle 1 angegebenen Komponenten nacheinander in der angegebenen Reihenfolge mittels eines Laborrührers zusammengerührt werden. Anschließend werden die Farben mit 300 µm Nassschichtdicke auf Eterplanplatten gerakelt und 24 Stunden bei Raumtemperatur getrocknet. Die Eterplanplatten werden dabei vorher mit einer 33 %igen CaCl₂ Lösung eingestrichen und 24 Stunden bei Raumtemperatur getrocknet um Ausblühungen zu forcieren. Anschließend werden die mit Farbe beschichteten Platten 7 Tage mit der beschichteten Seite über einem 60°C warmen Wasserbad gelagert um Ausblühungen zu forcieren. Danach werden die Platten bei Raumtemperatur getrocknet und die Ausblühungen beurteilt. Die Ergebnisse sind in Tabelle 1 zusammengestellt.

Tabelle 1 zeigt, dass der Zusatz einer Styrol-Maleinsäureanhydrid-Copolymer Lösung das Ausblühverhalten der Farben verbessert.

### Beispiele 17 bis 22:

Herstellung von Farben und Beschichtung von Eterplanplatten, sowie Beurteilung des Ausblühverhaltens (Vergleichsbeispiele 18, 20 und 22)

Es werden Farben hergestellt, indem die in Tabelle 2 angegebenen Komponenten nacheinander in der angegebenen Reihenfolge mittels eines Laborrührers zusammengerührt werden. Anschließend werden die Farben mit 300 µm Nassschichtdicke auf Eterplanplatten gerakelt und 24 Stunden bei Raumtemperatur getrocknet. Die Eterplanplatten werden dabei vorher mit einer 33 %igen CaCl₂ Lösung eingestrichen und 24 Stunden bei Raumtemperatur getrocknet um Ausblühungen zu forcieren. Anschließend werden die mit Farbe beschichteten Platten 7 Tage mit der beschichteten Seite über einem 60°C warmen Wasserbad gelagert um Ausblühungen zu forcieren. Danach werden die Platten bei Raumtemperatur getrocknet und die Ausblühungen beurteilt.

Tabelle 2 zeigt, dass der Zusatz einer Styrol-Maleinsäureanhydrid-Copolymer Lösung das Ausblühverhalten der Farben verbessert.

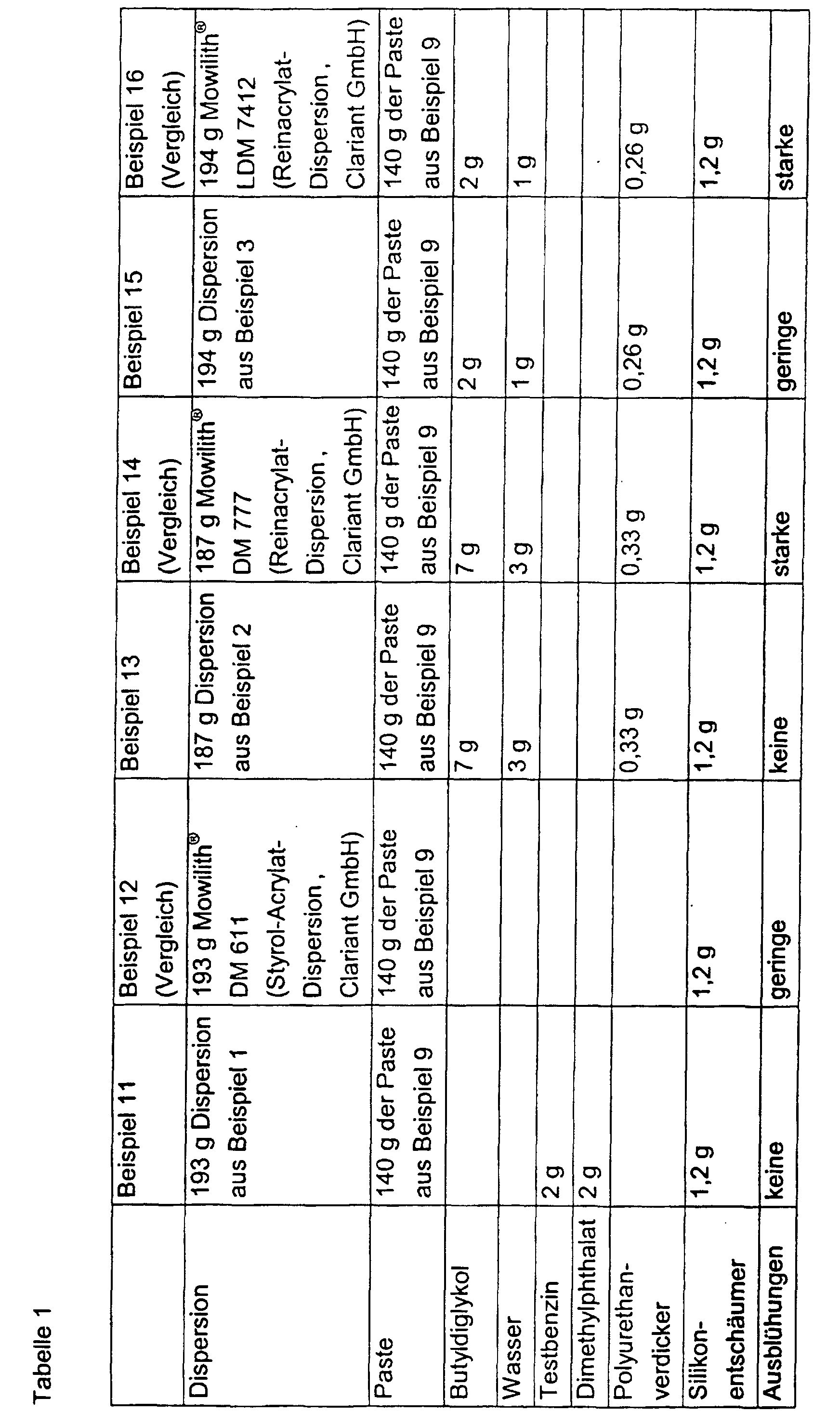

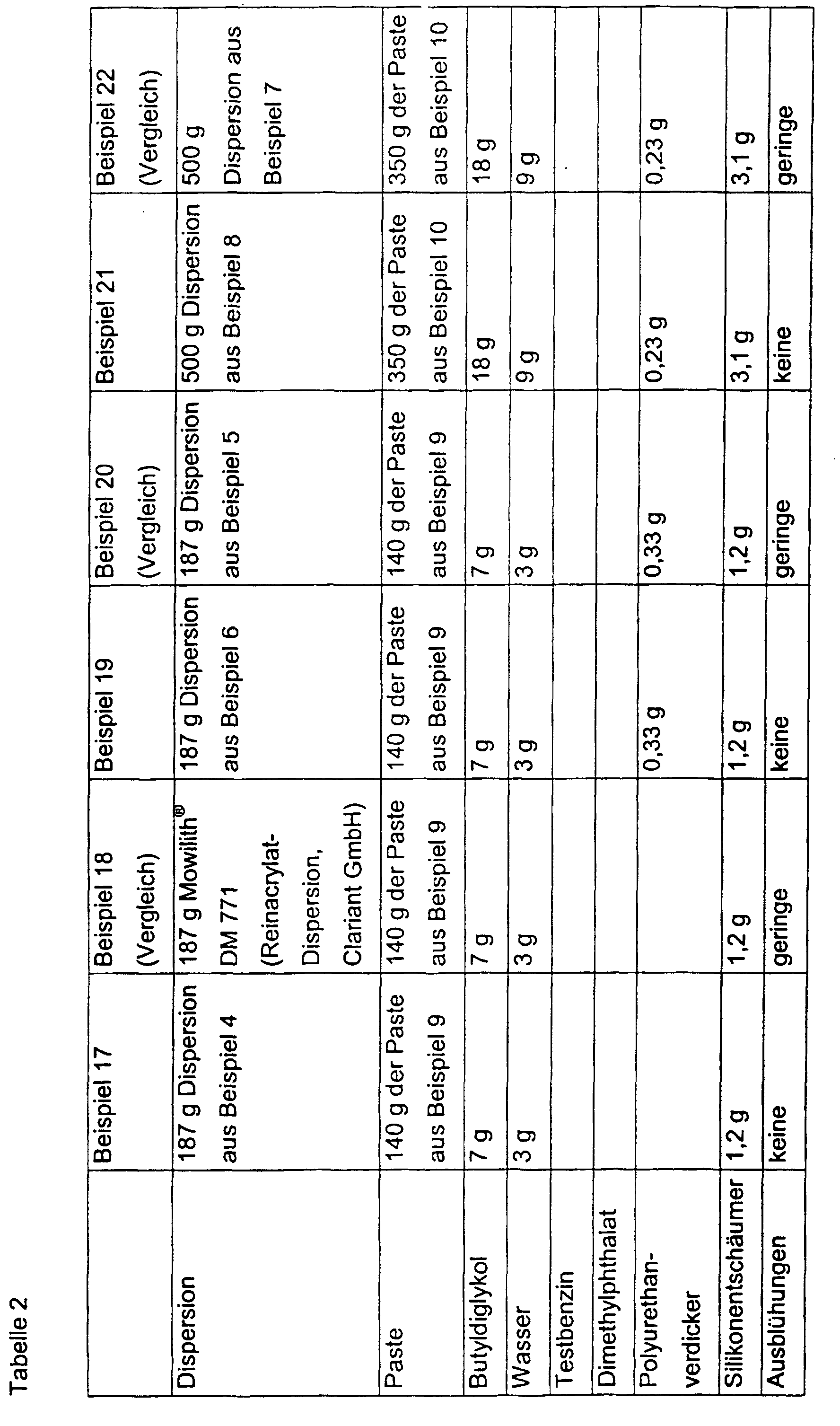

## Patentansprüche

1. Verfahren zur Herstellung eines zumindest teilweise beschichteten mineralischen Formkörpers durch Auftragen eines wässrigen Beschichtungsmittels, enthaltend eine Polymerdispersion als Bindemittel und mindestens eine wässrige Styrol-Maleinsäureanhydrid-Copolymer Lösung, auf zumindest einen Teil der Oberfläche des Formkörpers und anschließende Härtung des Formkörpers und Trocknung des Beschichtungsmittels, **dadurch gekennzeichnet, dass** die mindestens eine wässrige Styrol-Maleinsäureanhydrid-Copolymer Lösung der Polymerdispersion nach Abschluß der Polymerisation zugesetzt wird.

2. Verfahren nach Anspruch 1, **dadurch gekennzeichnet, dass** die Polymerdispersion, bezogen auf den Feststoffanteil, 0,5 bis 5 Gew.-% an Styrol-Maleinsäureanhydrid Copolymeren enthält.

3. Verfahren nach Anspruch 1 oder 2, dadurch gekenn-zeichnet, dass die Polymerdispersion auf einem Polymer basiert, das als Monomere
a) 85 bis 100 Gew.-% Ester der Acrylsäure mit C₁-C₁₂ Alkanolen, Ester der Methacrylsäure mit C₁-C₁₂ Alkanolen und/oder vinylaromatische Monomere
b) 0 bis 5 Gew.-% stabilisierende Monomere und
c) 0 bis 10 Gew.-% sonstige Monomere enthält,
wobei die Glastemperatur T_{g} des Polymeren -10 bis 60°C beträgt.

4. Verfahren nach Anspruch 3, **dadurch gekennzeichnet, dass** es sich bei den Monomeren a) um Ester der Acrylsäure mit C₁-C₁₂ Alkanolen und/oder Styrol handelt.

5. Verfahren nach Anspruch 3, **dadurch gekennzeichnet, dass** es sich bei den Monomeren b) um Carbonsäuren, Carbonsäureamide, Phosphate, Phosphonate, Sulfate und/oder Sulfonate handelt.

6. Verfahren nach Anspruch 3, **dadurch gekennzeichnet, dass** es sich bei den Monomeren c) um ketogruppenhaltige Monomere, copolymerisierbare Derivate des Diacetons, copolymerisierbare Silane und/oder copolymerisierbare Ethylenharnstoffderivate handelt.

7. Verfahren nach mindestens einem der Ansprüche 1 bis 6, **dadurch gekennzeichnet, dass** das Beschichtungsmittel noch Filmbildemittel, Dispergiermittel, Verdicker, Emulgatoren, Schutzkolloide, Stabilisatoren, Konservierungsmittel, Entschäumer, Netzmittel, Pigmente und/oder Füllstoffe enthält.

8. Verfahren nach mindestens einem der Ansprüche 1 bis 7, **dadurch gekennzeichnet, dass** man anschließend an die Härtung des Formkörpers und Trocknung des Beschichtungsmittels eine weitere Schicht eines Beschichtungsmittels auf den Formkörper aufträgt und anschließend das Beschichtungsmittel trocknet und gegebenenfalls anschließend das Verfahren einmal oder mehrmals wiederholt.

9. Verfahren nach mindestens einem der Ansprüche 1 bis 8, **dadurch gekennzeichnet, dass** es sich bei den mineralischen Formkörpern um Dachsteine oder Faserzementplatten handelt.

10. Verfahren nach mindestens einem der Ansprüche 1 bis 9, **dadurch gekennzeichnet, dass** es sich bei den Beschichtungsmitteln um Dachsteinfarben handelt.

11. Mineralische Formkörper, erhältlich nach einem Verfahren gemäß mindestens einem der Ansprüche 1 bis 10.

## Claims

1. A process for producing an at least partially coated mineral molding, by applying an aqueous coating composition comprising a polymer dispersion as binder and comprising at least one aqueous styrene-maleic anhydride copolymer solution to at least part of the surface of the molding, followed by setting of the molding and drying of the coating composition, which comprises adding the at least one aqueous styrene-maleic anhydride copolymer solution to the polymer dispersion after conclusion of the polymerization.

2. The process as claimed in claim 1, wherein, based on solids content, the polymer dispersion comprises from 0.5 to 5% by weight of styrene-maleic anhydride copolymers.

3. The process as claimed in claim 1 or 2, wherein the polymer dispersion is based on a polymer in which the monomers present are
a) from 85 to 100% by weight of esters of acrylic acid with C₁-C₁₂ alkanols, esters of methacrylic acid with C₁-C₁₂ alkanols, and/or vinylaromatic monomers,
b) from 0 to 5% by weight of stabilizing monomers, and
c) from 0 to 10% by weight of other monomers,
where the glass transition temperature T_{g} of the polymer is from -10 to 60°C.

4. The process as claimed in claim 3, wherein the monomers a) are esters of acrylic acid with C₁-C₁₂ alkanols and/or styrene.

5. A process as claimed in claim 3, wherein the monomers b) are carboxylic acids, carboxamides, phosphates, phosphonates, sulfates, and/or sulfonates.

6. The process as claimed in claim 3, wherein the monomers c) are keto-group-containing monomers, copolymerizable derivatives of diacetone, copolymerizable silanes, and/or copolymerizable ethyleneurea derivatives.

7. The process as claimed in at least one of claims 1 to 6, wherein the coating composition also comprises film-forming agents, dispersing agents, thickeners, emulsifiers, protective colloids, stabilizers, preservatives, antifoams, wetting agents, pigments, and/or fillers.

8. The process as claimed in at least one of claims 1 to 7, wherein, following the setting of the molding and drying of the coating composition, another layer of a coating composition is applied to the molding, and then the coating composition is dried and, where appropriate, the process is repeated one or more times.

9. The process as claimed in at least one of claims 1 to 8, wherein the mineral moldings are roofing tiles or fiber-filled cement panels.

10. The process as claimed in at least one of claims 1 to 9, wherein the coating compositions are roofing-tile paints.

11. A mineral molding obtainable by a process as claimed in at least one of claims 1 to 10.

## Revendications

1. Procédé de fabrication d'un corps minéral moulé au moins partiellement revêtu par dépôt d'une composition aqueuse de revêtement, contenant une dispersion de polymère comme liant et au moins une solution de copolymère de styrène-anhydride d'acide maléique, sur au moins une partie de la surface du corps moulé, suivi par un durcissement du corps moulé et un séchage de la composition de revêtement, **caractérisé en ce qu'**on ajoute la au moins une solution aqueuse de copolymère de styrène-anhydride d'acide maléique après la fin de la polymérisation.

2. Procédé selon la revendication 1, **caractérisé en ce que** la dispersion de polymère contient de 0,5 à 5 % en poids de copolymères de styrène-anhydride d'acide maléique, par rapport à la teneur en matières solides.

3. Procédé selon la revendication 1 ou 2, **caractérisé en ce que** la dispersion de polymère est basée sur un polymère, qui contient comme monomères
a) de 85 à 100 % en poids d'esters de l'acide acrylique avec des alcanols en C₁ à C₁₂, d'esters de l'acide méthacrylique avec des alcanols en C₁ à C₁₂ et/ou de monomères aromatiques de vinyle,
b) de 0 à 5 % en poids de monomères stabilisants et
c) de 0 à 10 % en poids d'autres monomères,
la température de transition vitreuse Tg du polymère étant de -10 à 60 °C.

4. Procédé selon la revendication 3, **caractérisé en ce qu'**il s'agit pour les monomères a) d'esters de l'acide acrylique avec des alcanols en C₁ à C₁₂ et/ou de styrène.

5. Procédé selon la revendication 3, **caractérisé en ce qu'**il s'agit pour les monomères b) d'acides carboxyliques, d'amides d'acide carboxylique, de phosphates, phosphonates, sulfates et/ou sulfonates.

6. Procédé selon la revendication 3, **caractérisé en ce qu'**il s'agit pour les monomères c) de monomères contenant des groupes céto, de dérivés copolymérisables de la diacétone, de silanes copolymérisables et/ou de dérivés copolymérisables d'éthylène-urée.

7. Procédé selon au moins l'une des revendications 1 à 6, **caractérisé en ce que** la composition de revêtement contient encore des agents filmogènes, des agents dispersants, des agents épaississants, des agents émulsifiants, des colloïdes protecteurs, des stabilisants, des conservateurs, des agents antimousse, des agents mouillants, des pigments et/ou des charges.

8. Procédé selon au moins l'une des revendications 1 à 7, caractérisé en ce l'on dépose sur le corps moulé à la suite du durcissement du corps moulé et du séchage de la composition de revêtement une autre couche d'une composition de revêtement et on sèche ensuite la composition de revêtement et on répète éventuellement ensuite une ou plusieurs fois le procédé.

9. Procédé selon au moins l'une des revendications 1 à 8, **caractérisé en ce qu'**il s'agit pour les corps moulés minéraux de tuiles ou de plaques de ciment chargé de fibres.

10. Procédé selon au moins l'une des revendications 1 à 9, caractérisé en qu'il s'agit pour les compositions de revêtement de colorants de tuiles.

11. Corps moulés minéraux, pouvant être obtenus par un procédé selon au moins l'une des revendications 1 à 10.
